# EUROPEAN PATENT SPECIFICATION

(11) **EP 1 088 946 B1**
(45) Date of publication and mention of the grant of the patent: **06.07.2011**
(21) Application number: 00120755.4
(22) Date of filing: 22.09.2000
(51) Int. Cl.: E04B 1/86, C04B 38/10, C04B 28/14, C04B 111/52

(54) **Acoustical panel having a honeycomb structure and method of making the same**
Akustische Platte mit Wabenstruktur und Herstellungsverfahren
Panneau acoustique présentant une structure en nid d'abeille et procédé de fabrication

(30) Priority: 01.10.1999 US 157269 P; 01.10.1999 US 157301 P
(43) Date of publication of application: 04.04.2001
(73) Proprietor: Armstrong World Industries, Inc., Lancaster Pennsylvania 17603 (US)
(72) Inventor: Putt, Dean L., Lititz, Pennsylvania 17543 (US); Work, James L., Lancaster, Pennsylvania 17601 (US)
(74) Representative: Finck, Dieter

(56) References cited:
- EP-A- 0 935 030
- WO-A-99/63169
- FR-A- 2 612 225
- GB-A- 2 277 710
- US-A- 4 441 944
- US-A- 4 613 627
- US-A- 5 824 148

## Description

The present invention relates to an acoustically absorbent porous panel according to the preamble of claim 1.

The manufacture of wet-laid acoustical panels includes a wet process having separate dilute water streams of fiber, fillers and binder which are then mixed together to create a slurry. The fibers are either organic or inorganic. Usually the fibers are inorganic for fire resistance. A typical binder is starch. Fillers may include newsprint (which also acts as a binder), clay, and perlite. A typical panel wet-forming process involves the successive steps of depositing a wet slurry onto a conveyor screen, draining water from the slurry through the screen including the use of suction for further water removal, compressing out additional water by means of a roll press and finally hot air drying the resulting wet panel as it is cast on the screen. Upon entering a drier, the wet panel typically has a 60 to 70% water content.

One of the most important aspects of a ceiling board is its sound absorption function. Artisans have employed many different techniques to increase sound absorption of acoustic panels, including apertures, fissuring, and striating. The relative noise reduction capability is expressed in terms of a Noise Reduction Coefficient (NRC). Historically, wet processed acoustical panels have not had a very high NRC as compared to dry processed ceiling boards, such as those made from fiberglass batts. However, there are many disadvantages associated with the use of fiberglass. Disadvantages include the cost of the fiberglass relative to natural fibers, complexity and costs associated with manufacturing fiberglass acoustical panels with organic binders, health and environmental concerns associated with the use of organic solvents and organic binders in the manufacture of fiberglass acoustic panels, and the lack of strength associated with acoustic panels having inner cores comprised of fiberglass batts.

In the manufacture of wet-processed acoustical panels, it is desirable for the sound absorbent composite materials to achieve an acceptable level of sound absorbency. This is usually done by reducing the density of the panel or increasing the panel thickness. Competing with the requirement of high acoustical absorbency is the need for a relatively stiff material to provide sufficient structural integrity and sufficient surface hardness to resist punctures and dents which may occur during the manufacture, transport, installation or use of the product. Additionally, a minimum thickness is also desirable to lower the material cost associated with the manufacture of acoustical panels from the acoustically absorbent material.

Unfortunately, wet-processed materials that exhibit sufficient stiffness and surface hardness are usually quite dense, have small and closed pores, and therefore do not display acceptable sound absorption characteristics. Furthermore, wet-processed materials with highly acoustical absorbent properties are much less dense due to increased porosity, and therefore do not exhibit sufficient stiffness and surface hardness properties required for acoustic panel applications. Additionally, since traditional wet-processing techniques require a vacuum drawn through a cross-section of the wet-laid material to remove water, a significant porosity size gradient arises through a cross-section of the panel, which further degrades the acoustic attenuation properties and strength of the finished panel.

US 5 824 148 A, which is considered as the prior art of the generic kind, discloses a cementitious composition with improved sound absorbing capability. The composition has an interconnected open cellular structure such that at least 20 to 100% of the composition's surface area is open to provide access to sound waves and has an air-dry density in a range of about 132 to 1520 kg/m³. The composition comprises cement, including among others gypsum cement, aggregate, including among others polyester fibers, water and a surfactant as foaming agent. The surfactant is a solution comprising an ammonium salt and is preblended with water at a dilution ratio in a range of water to surfactant from 40:1 to 10:1. The water is blended with the surfactant to provide a preformed foam liquid, which is aerated by being pumped under pressure with air through a nozzle. A mixture of cement and water is combined with the aerated preformed foam liquid. Thereafter the aggregate is added and the combination is mixed until a required density of the composition is reached. The compressive strength of the produced composition is between 2.07 to 41.4 MPa. The noise reduction coefficient level is acceptable.

It is the object of the present invention to create a novel acoustical panel having a high acoustic absorbency by altering the shape of a surface of the panel to achieve both good sound reduction and to retain excellent strength properties.

Based on the acoustically absorbent porous panel of the preamble of claim 1, this object is obtained with the characterizing features of claim 1. Claims 2 to 16 refer to preferred embodiments of the invention, while claim 17 refers to a process for making an acoustically absorbent porous panel supplemented by a preferred measure according to claim 18.

The present invention relates to an acoustic panel including at least one layer for use in attenuating sound. This layer may be constructed from an open celled, porous material. The first layer includes a first face and second face disposed opposite the first face and an edge portion defining a periphery of the first and second faces, wherein the edge portion includes a thickness which separates the first and second faces to form a solid shape, typically a substantially rectangular solid shape.

The first face has a substantially planar profile and the second face includes a substantially geometric pattern of depressions molded into the second face. Each of the depressions creates void volume removed from a rectangular solid wherein a total volume of the acoustic panel is defined by the volume of the substantially rectangular solid shape minus the aggregate volume of the void volumes within the depressions. The layer within the acoustic panel resembles a honeycomb-type appearance. The depressions may be comprised of any shape. For example, the depressions may comprise a void volume having a semi-spherical shape, a cubic shape, an inverse pyramidal shape, or any other geometric solid shape that accomplishes the sound absorbency purposes of the acoustic panel.

In an embodiment, the open celled, porous material comprising one of the layers within the acoustic panel may comprise a density ranging from 272 to 640 kg/m³ (17 to 40 lb/ft ³). Additionally, the total void volume of a layer within the panel may comprise 50% to 90% of the total volume of the solid shape of a layer within the acoustic panel. The pore size distribution within the open celled, porous material may comprise 45 microns to 200 microns.

In an alternative embodiment of the present invention, a layer within the acoustic panel may include a scrim material adhered to the second surface covering the depressions. The scrim material may comprise any known fabric, however, Applicants have found that a non-woven fiberglass scrim having an air flow of 2.8 to 28.3 m³/min (100 to 1,000 ft²/min), as per ASTM D 737 test method, is suitable. In another embodiment of the present invention, the first planar face of the layer within the acoustic panel may include a backing material to further increase the acoustic absorbency of the overall panel.

The layer with a series of depressions may be comprised of any number of materials including a foamed cementitious or foamed gypsum material. The foamed cementitious material may include portland cement, sorrel cement, slag cement, fly ash cement or alumina cement. The foamed gypsum material may include calcium sulfate alpha hemihydrate or calcium sulfate beta hemihydrate. The foamed cement or foamed gypsum material may also include a surfactant to promote the foaming of the cement during mixing to entrap air and to create the open celled porous construction of the layer. Additionally, the foamed cement or foamed gypsum material may also include natural or synthetic fibers to further strengthen the cement. Such fibers may include inorganic fibers, or synthetic organic fibers comprised of, but not limited to, polyolefin, polyamide or polyester material. The surfactants may be anionic, nonionic, and amphoteric.

In an alternative embodiment, an acoustic panel may comprise two layers of the honeycombed material wherein the two layers are attached to one another such that faces having geometric depressions are facing one another, so as to create voids comprised of mirrored depressions to increase the acoustic absorbency of the panel.

These and other features of the present invention will become apparent upon reading the following specification, when taken in conjunction with the accompanying drawings.
Figure 1 is a top plan view of a surface of a layer within an acoustic panel according to the present invention.
Figure 2 is a cross sectional view of an acoustic panel according to the present invention, illustrating a scrim and a backing material adhered to either sides of the honeycombed layer within the panel.
Figure 3 illustrates an alternative embodiment of the present invention, comprising at least two honeycombed layers.

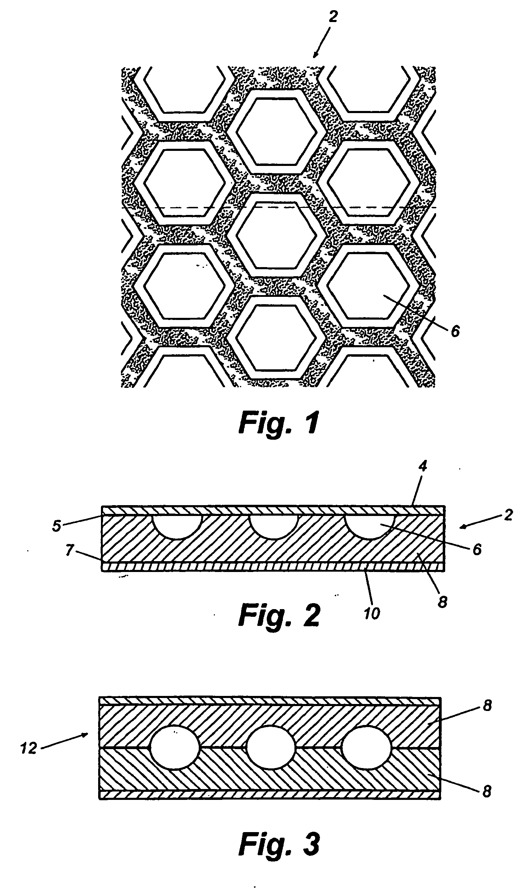

Figure 1 illustrates a top plan view of a patterned surface having a multitude of depressions 6 which form a surface of a layer within an acoustic panel 2, according to the present invention. Although the depressions 6 illustrated in Figure 1 have a generally hexagonal cross section, the ordinarily skilled artisan will understand that the shape of the depressions may be semi-cylindrical, cubical, or any other shape which will effectively enhance the acoustic absorbency of a panel constructed in accordance with the present invention.

Figure 2 illustrates an alternative embodiment in which the acoustic panel 2 includes a scrim layer 4 adhered to surface 5, and a backing layer 10 adhered to surface 7. The layer 8, which includes the depressions 6, is formed from an open celled, porous material. One example of a material for use as a layer 8 is foamed gypsum, more specifically, alpha or beta gypsum, or mixtures thereof. The composition may include fibrous materials to add strength. Among fibrous materials suitable for use in layer 8 are synthetic organic fibers such as polyolefins, polyamids and polyesters.

It is important that the layer 8 be constructed from a foamed material. A surfactant typically facilitates development of a foam structure and matrix around which the cementitious material solidifies. Surfactants may include anionic, nonionic and amphoteric surfactants.

Another example of a material which may comprise the layer 8 of the acoustic panel 2 is a foamed cement. Examples of cement which may be used include portland cement, gypsum cement, sorrel cement, slag cement, fly ash cement, alumina cement and mixtures of any of the above referenced cements. The cement mixture may also include inorganic fibrous materials such as wollastonite, a fibrous form of calcium silicate. Other fibers include synthetic organic fibers such as polyolefin, polyamide and polyester materials. Since the foamed cement must encapsulate air while it is being mixed before inserting into a mold, it has been found that anionic, nonionic, and amphoteric surfactants are suitable in creating a cementitious foam.

To enhance the acoustic absorbency of the panel 2, a scrim 4 may be adhered to surface 5 to cover the depressions or voids 6. Although any scrim material is acceptable, Applicants have found that a non-woven fiberglass from approximately 0.076 to 0.76 mm (0.003 to 0.030 inches) thick, having an air flow of 2.8 to 28.3 m³/min (100 to 1,000 ft³/mm) is acceptable.

Additionally, Applicants have found that the addition of a backing material 10 adhered to a second face 7 of the present invention, also enhances the acoustic absorbency of the invention. The backing may be additional foamed material having a thickness of 6.35 to 19 mm (0.25 to 0.75 inches). An additional layer may be comprised of any acoustical material, but Applicants have found that a foamed cementitious composition works best.

In general, the porous, open celled material that makes up the layer 8 within the acoustic panel 2 of Figure 2 should have a pore size of 40 to 200 microns. Additionally, where a foamed cement is utilized as a material for the layer 8 within the acoustic panel 2, the pores should comprise 75 to 95 volume percent of the panel 8. Additionally, the total volume of the depressions 6 should comprise 50% to 90% of the total volume of layer 8 without depressions 6. Applicants have also found that a depth of an acoustical cell of 3.2 to 50.8 mm (1/8 to 2 inches) is acceptable. Additionally, the density of the cementitious or foamed gypsum material used for the layer 8 should have a density of 272 to 640 kg/m³ (17 to 40 lb/ft³). Finally, it has been found that a backing thickness of 6.35 to 19 mm (0.5 to 0.75 inches) is suitable for the above referenced backing 10 within panel 2.

Also envisioned is an alternative panel 12, shown in Figure 3, comprised of two layers 8 having depressions 6 that face one another to create depressions within the acoustic panel 12. The panel may be comprised of the foamed gypsum or foamed cement material including any of the ingredients as envisioned in the present invention. Additionally, a backing material layer 10 may be applied to the smooth outer surfaces of panel 12, if acoustic absorbency parameters warrant the addition of such backing material.

The following examples below are merely various experiments used to validate the above referenced invention and are in no way intended to limit the present invention. The Formulation Table set forth below illustrates the various formulations 1 through 7 for the examples that follow. The Formulation Table below expresses each constituent as a percentage by weight. In each of the examples that follow, density is expressed as kg /m³ lb/ft³).

### FORMULATION TABLE

| **Formulation** | **1** | **2** | **3** | **4** | **5** | **6** | **7** |
|---|---|---|---|---|---|---|---|
| Gypsum | 65.5 | 63.1 | 61.8 | 60.6 | 58.4 | 56.4 | 54.5 |
| Water | 32.8 | 35.4 | 36.7 | 37.9 | 40.1 | 42.2 | 44.2 |
| Surfactant | 1.0 | 0.9 | 0.9 | 0.9 | 0.9 | 0.8 | 0.8 |
| Fiber | 0.7 | 0.6 | 0.6 | 0.6 | 0.6 | 0.6 | 0.5 |
| Dry density | (50) 800 | (48) 768 | (40) 640 | (30) 480 | (25) 400 | (20) 320 | (17) 272 |

In the first evaluation of Example 1, Applicants compared acoustics of panels having a single cavity of fixed depth and varied the open area by increasing the diameter of the cavity. The amount of open area is reported as a percentage of total surface area of the layer of gypsum or cementitious foam. For each of the measurements, the face of the layer having the various depressions or cavities was enclosed with a fiberglass scrim as disclosed above. A fiberglass scrim of 0.51 mm (0.020 inches) thick was used for this particular example. In Example 1, Applicants measured the Noise Reduction Coefficient as a function of increasing front cavity area percentage. In Examples 1, 2 and 4 through 6 Applicants determined NRC per ASTM E1050-90, C634, C384 and E548 specifications using an impedance tube device. The column entitled "Scrim" notes that the sound was directed at the scrim, and the column entitled "Back" notes that the sound was directed at the planar surface of the panel opposite the scrim.

### EXAMPLE 1 [Formulation 4]

| **Front Cavity Percentage** | **NRC (Scrim)** | **NRC (Back)** |
|---|---|---|
| 0% | 0.66 | 0.70 |
| 10% | 0.71 | 0.72 |
| 17% | 0.67 | 0.73 |
| 26% | 0.69 | 0.69 |
| 37% | 0.68 | 0.68 |
| 50% | 0.66 | 0.70 |
| 70% | 0.64 | 0.71 |

Applicants believe that the data produced from Example 1 reveals little variation in acoustical values as related to the diameter or void volume of the cavity.

In Example 2, Applicants evaluated the overall effect of the thickness of the backing with regard to acoustic performance. In this Example, a 9.5 mm (3/8 inch) thick layer 8, having the various depressions 6, therein integral with the foamed, cementitious composition, having a thickness of 0 to 9.8 mm (0 to 3/8 inch) as measured from the bottom of the cell depressions to the planar first surface was varied. A fiberglass scrim was applied over the depressions on a first surface of layer 8. NRC values in the table below for Example 2 note whether the sound was directed at the scrim or at the planar backside of the gypsum foam. The data reveal some dependence of NRC on the direction from which the sound approaches the foamed material within the layer 8. Applicants have concluded that the scrim covered, honeycombed face is more effective as an acoustic absorber than the planar backside when oriented toward the incoming sound.

### EXAMPLE 2 [Formulation 4]

| **Backing Thickness** | **Scrim** | **Back** |
|---|---|---|
| 0 | 1.00 | 1.00 |
| 1.6 mm (1/16) | 0.83 | 0.84 |
| 3.2 mm (1/8) | 0.78 | 0.78 |
| 6.4 mm (1/4) | 0.79 | 0.70 |
| 9.5 mm (3/8) | 0.72 | 0.59 |

Example 3 below illustrates an additional test of the same material of Formulation 4 to confirm that the scrim covered honeycombed face is more acoustical than the continuous back face. For Example 3, Applicants utilized a reverberation room test that conforms to the following standards: ASTM C423-90a, E 122, E 548, E 795; ANSI S1.6, S1.26, S.1.11; and ISO R 354-1963. Applicants also conducted an airflow test that conforms to ASTM D 737 standards. Additionally, Applicants conducted Sound Transmission Coefficient (STC) tests having results determined by an insertion loss as set forth in ASTM E 90.

### EXAMPLE 3 [Formulation 4]

| | **NRC (reverb room)** | | **Air Flow (ohms)** | | **STC** | |
|---|---|---|---|---|---|---|
| **Honeycomb** | **Scrim** | **Back** | **Scrim** | **Back** | **Scrim** | **Back** |
| 480 kg/m³(30 lb/ft³) | 0.48 | 0.38 | 2 | 16 | 34 | 35 |

Another major property for examination was the density of the gypsum foam used for the layer 8. In Example 4, Applicants controlled the density to some extent by varying the amount of water added to the mixture. A greater weight percentage of water results in a lower density foam, when the foam is dried. All samples of the layer 8 were 15.9 mm (5/8 of an inch) thick, without depression 6 . The relationship between the density and acoustical properties is most significant as demonstrated in the table for Example 4 below. The greatest acoustical absorbency occurs between the density ranges from 272 to 400 kg /m³ (17 to 25 lb/ft³)

### EXAMPLE4

| **Formulation** | **Density** | **NRC** |
|---|---|---|
| 7 | 272 kg/m³(17 lb/ft³) | 1.00 |
| 6 | 320 kg/m³(20 lb/ft³) | 0.80 |
| 5 | 400 kg/m³ (25 lb/ft³) | 0.48 |
| 4 | 480 kg/m³(30 lb/ft³) | 0.36 |
| 2 | 768 kg/m³(48 lb/ft³) | 0.29 |
| 1 | 800 kg/m³(501b/ft³) | 0.24 |

The table of Example 5 below illustrates yet another example of the effect of density on acoustics. In Example 5, Applicants compared samples of various thickness and density. Applicants found that the Noise Reduction Coefficient decreased markedly with an increase in density.

### EXAMPLE 5 [Formulations 1 & 3]

| **Density** | **Thickness (in.)** | **NRC** |
|---|---|---|
| 640 kg/m³ [40 (lb/cuft)] | 12.7 mm (1/2) | 0.41 |
| Formulation 3 | | |
| 640 kg/m³ [40 (lb/cuft)] | 15.9 mm (5/8) | 0.43 |
| Formulation 3 | | |
| 800 kg/m³ [50 (lb/cuft)] | 12.7 mm (1/2) | 0.24 |
| Formulation 1 | | |
| 800 kg/m³ [50 (lb/cubft)] | 15.9 mm (5/8) | 0.24 |
| Formulation 1 | | |

Next, Applicants made three layers 8, each having a density of 448 kg/m³ (28 lb/ft³) and measured the Noise Reduction Coefficient with increasing cell depth within a 15.9 mm (5/8 inch) thick panel.

### EXAMPLE 6 [Formulation 1]

| **Cell Depth** | **NRC** |
|---|---|
| 3.17 mm (0.125 in.) | 0.57 |
| 6.34 mm (0.250 in.) | 0.75 |
| 9.53 mm (0.375 in.) | 0.79 |

The data reveals that the depth of the cell has a significant effect in determining the acoustical properties of the structure. The width of the cell, however, as presented in Example 1 has very little significance.

Finally, the Applicants demonstrated a relationship between density and pore size distribution in these structures. Pore size distribution was determined using a Micromeritics AutoPore II 9220 Mercury Porosimeter and are tabled in Example 7. Pore sizes outside of those noted are not measurable by this equipment.

### EXAMPLE 7

| **Density** | **Average pore size** | **Pore size distribution** |
|---|---|---|
| 272 kg/m³(17 lb/cuft*)* | 10 microns | 1-10 microns, 20%; 42-250 microns, |
| Formulation 7 | | 70% |
| 400 kg/m³ (25 lb/cuft) | 8 microns | 1-10 microns, 20%; 20-200 microns, |
| Formulation 5 | | 70% |
| 640 kg/m³ (40 lb/cuft) | 4 microns | 1-10 microns, 40%; 11-42 microns, 50% |
| Formulation 3 | | |

As illustrated in the table of Example 7, if one were to make a line graph of pore size distribution and compare the results to the table of Example 4, which illustrates acoustics vs. density, a higher NRC occurs when the pore size distribution of the foamed cementitious composite is in the range of 45 - 200 microns. Applicants therefore conclude from the above-referenced data that acoustic properties change as a function of the pore size distribution. Applicants believe that the control of pore size distribution is a unique manner of controlling the acoustic absorbency of the inventive foamed material.

The cementitious material is relatively resistant to moisture. This can be quantified as a value determined from a sag test. The following are approximate four-cycle sag test ranges for various embodiments. Each cycle consists of subjecting the 0.6 x 0.6 m (2ft by 2ft) sample to 17 hours at 27.8°C (82°F) and 90% RH followed by 6 hours at 27.8°C (82°F) and 35% RH. In traditional wet fiberboards, at 90% RH there is typically a resulting sag of less than 3.8 mm (0.15 inches). In one embodiment, at 90% RH there is typically a resulting sag of less than 2.5 mm (0.1 inches). In another embodiment, at 90% RH there is typically a resulting sag of less than 1.3 mm (0.05 inches).

As discussed above, the inventive honeycombed structure may also be comprised of a foamed cement or gypsum. The formulation of the foamed cementitious material in uncured, wet weight percentages may include 53% to 68% cement; 17% to 48% water; 0.05% to 5% fibers; and 0.01% to 10% surfactant. The fibers may be synthetic organic fibers, such as those formed from polyesters. Other formulations for the foamed cementitious material in uncured, wet weight percentages may include 54% to 61% cement; 32% to 44% water; 0.1% to 3% fibers; and 0.5% to 5% surfactant. Additionally, the foamed cementitious material in uncured, wet weight percentages may include 56% to 61% cement; 32% to 42% water; 0.28% to 1.3% fibers; and 0.7% to 2% surfactant.

Furthermore, the formulation in weight percentages may include 54.5% to approximately 65.5% gypsum or cement, 32.8% to 44.2% water, 0.8% to 1.0% surfactant, and approximately 0.01% to 0.7% fiber. In making the above-mentioned composition, one method may involve combining all dry ingredients for uniform dispersion of the polyester fiber (if fiber is used, as it is not necessary to the present invention, but increases panel strength). In this method the process may involve the preparation a 40% surfactant solution of disodium laureth sulfosuccinate and then the addition of the surfactant solution to the dry mix to wet and combine all ingredients. The process may then include the step of whipping the fiber, cement, and surfactant mixture at a high speed with a wire whisk for one to three minutes until the cement/gypsum (-fiber) mix foams. The process may also include the initiation of a secondary, low shear mixing operation to disperse the fibers (if used) which may ball up during the high speed mixing cycle. In the secondary low shear mixing operations, the process may utilize a low shear paddle mixer which is similar to those used with spackling and plaster mixing to disperse the clumps of fiber. The process may involve mixing the foam cement at a low speed until just before the foam begins to collapse. The process may then involve applying the foamed material to a honeycomb mold for curing.

The resulting foamed material produces a cementitious composition with a density between 160 and 640 kg/m³ (10 and 40 lbs/ft³). In an alternative embodiment the panel can have a density between 240 and 560 kg/m³ (15 and 35 lbs/ft³) or between 320 and 480 kg/m³ (20 and 30 lbs/ft³).

One specific step in the inventive process also includes details in the preparation of the surfactant solution. More specifically, Applicants have found that the maximum foaming of a portland cement or gypsum mixture occurs when the surfactant solution is prepared between 20°C (68°F) and 37.8°C (100°F), with the preferred temperature of 32.2°C (90°F) Fahrenheit. Applicants have also determined that a deviation in water temperature from the optimum temperature range will increase the density of the foam by a factor of 80 kg/m³ (5 lb/ft³) for every 5.5°C (10 °F) deviation. Thus, it is advantageous to keep the surfactant water solution temperature at 32.2°C (90°F)

It is contemplated that many types of materials may comprise the core of the inventive panel, as described above. Additionally, the present invention is not limited to ceiling tiles, but may include wall structures, exterior coverings and tackable surfaces.

## Claims

1. An acoustically absorbent porous panel comprising a layer (8)
- constructed from a substantially continuous open celled material
- - having interconnected pores therein and
- - comprising a cured foamed cementitious material
- -- having a first face (7) with a substantially planar profile and a second face (5) and
- -- being formed from an aerated aqueous foam slurry comprised of cement, water, synthetic organic fibers and surfactant,
**characterized in**
- **that** the foam slurry is comprised of
- - 53% to 68% by weight cement,
- - 17% to 48% by weight water,
- - 0.05% to 5% by weight synthetic organic fibers and
- - 0.01 % to 10% by weight surfactant and
- **that** the second face (5) has a geometric pattern of depressions (6) formed therein comprising 50% to 90% of the total volume of the solid shape of the layer (8) without depressions.

2. The acoustically absorbent porous panel of claim 1, wherein the cementitious material comprises about 53% to about 66% by weight cement.

3. The acoustically absorbent porous panel of claim 1, wherein the foamed cementitious material is formed from an aerated aqueous foam slurry comprised of
- 54% to 61% by weight cement,
- 32% to 44% by weight water,
- 0.1% to 3% by weight synthetic organic fibers and
- 0.5% to 5% by weight surfactant.

4. The acoustically absorbent porous panel of one of the preceding claims, wherein the cement is selected from the group consisting of gypsum cement, portland cement, sorrel cement, slag cement, fly ash cement, calcium alumina cement and mixtures thereof.

5. The acoustically absorbent porous panel of claim 4, wherein the gypsum cement is selected from the group consisting of calcium sulfate alpha hemihydrate and calcium sulfate beta hemihydrate.

6. The acoustically absorbent porous panel of one of the preceding claims, wherein the surfactant is selected from a group consisting of amphoteric, anionic, and nonionic moieties.

7. The acoustically absorbent porous panel of one of the preceding claims, wherein the fibers are synthetic organic fibers selected from the group consisting of polyester, polyamide, and polyolefin.

8. The acoustically absorbent porous panel of one of the preceding claims, wherein the interconnecting pores of the substantially continuous open-celled porous material of the layer (8) have an average size distribution of from 45 µm to 200 µm.

9. The acoustically absorbent porous panel of one of the preceding claims, wherein the layer (8) has a density between 160 and 640 kg/m³ (10 and 40 lbs/ft³).

10. The acoustically absorbent porous panel of claim 9, wherein the layer (8) has a density between 240 and 560 kg/m³ (15 and 35 lbs/ft³).

11. The acoustically absorbent porous panel of one of the preceding claims, wherein the depressions (6) are at least 3.2 mm (0.125 inches) deep.

12. The acoustically absorbent porous panel of one of the preceding claims, further comprising a backing material (10) adhered to the first face (7).

13. The acoustically absorbent porous panel of one of the preceding claims comprising two layers (8) which are attached to one another such that faces having the geometric depressions (6) are facing one another, so as to create voids comprised of mirrored depressions (6).

14. The acoustically absorbent porous panel of one of claims 1 to 12, further including a scrim material (4) attached to the second face (5).

15. The acoustically absorbent porous panel of claim 14, wherein the scrim (4) is formed from a non-woven fiberglass material having an air flow of 2.8 to 28.3 m³/min (100 to 1000 ft³/min).

16. The acoustically absorbent porous panel of claim 15, wherein the non-woven fiberglass material has a thickness between 0.076 and 0.76 mm (0.003 and 0.03 inches).

17. A process for making an acoustically absorbent porous panel comprising the steps of:
- combining on a wet basis 53% to 68% by weight cement, 17% to 48% by weight water, 0.05% to 5% by weight fiber, and 0.01% to 10% by weight surfactant to form an uncured aqueous foamed cementitious material,
- forming a layer (8) with the uncured aqueous foamed cementitious material,
- forming a geometric pattern of depressions (6) within one surface (5) of the layer (8) of uncured aequeous foamed cementitious material and
- curing the aqueous foamed cementitious material so that the depressions (6) formed therein comprise approximately 50% to approximately 90% of the layer (8).

18. The process of claim 17, further comprising applying a scrim material (4) to the surface (5) with the depressions (6) of the layer (8) of cured aqueous foamed cementitious material.

## Patentansprüche

1. Schallabsorbierendes poröses Paneel, umfassend eine Schicht (8),
- die aus einem im Wesentlichen durchgehenden offenzelligen Material aufgebaut ist,
- - in dem miteinander verbundene Poren vorgesehen sind und
- - das ein ausgehärtetes Schaumzementmaterial umfasst,
- -- das eine erste Fläche (7) mit einem im Wesentlichen ebenen Profil und eine zweite Fläche (5) aufweist und
- -- aus einer durchlüfteten wasserhaltigen Schaumaufschlämmung gebildet ist, die Zement, Wasser, synthetische organische Fasern und Oberflächenbehandlungsmittel umfasst,
**dadurch gekennzeichnet,**
- **dass** die Schaumaufschlämmung
- - 53 bis 68 Gewichtsprozent Zement,
- - 17 bis 48 Gewichtsprozent Wasser,
- - 0,05 bis 5 Gewichtsprozent synthetische organische Fasern und
- - 0,01 bis 10 Gewichtsprozent Oberflächenbehandlungsmittel umfasst und
- **dass** die zweite Fläche (5) ein geometrisches Muster aus darin ausgebildeten Vertiefungen (6) aufweist, die 50% bis 90% des Gesamtvolumens der festen Form der Schicht (8) ohne Vertiefungen umfasst.

2. Schallabsorbierendes poröses Paneel nach Anspruch 1, wobei das Zementmaterial etwa 53 bis 66 Gewichtsprozent Zement umfasst.

3. Schallabsorbierendes poröses Paneel nach Anspruch 1, wobei das Schaumzementmaterial aus einer durchlüfteten wasserhaltigen Schaumaufschlämmung gebildet ist, die
- 54 bis 61 Gewichtsprozent Zement,
- 32 bis 44 Gewichtsprozent Wasser,
- 0,1 bis 3 Gewichtsprozent synthetische organische Fasern und
- 0,5 bis 5 Gewichtsprozent Oberflächenbehandlungsmittel umfasst.

4. Schallabsorbierendes poröses Paneel nach einem der vorhergehenden Ansprüche, wobei der Zement aus der Gruppe ausgewählt ist, die aus Gipszement, Portlandzement, Sorelzement, Schlackenzement, Flugaschezement, Calciumaluminiumoxidzement und Gemischen von diesen besteht.

5. Schallabsorbierendes poröses Paneel nach Anspruch 4, wobei der Gipszement aus der Gruppe ausgewählt ist, die aus Calciumsulfat-Alpha-Halbhydrat und Calciumsulfat-Beta-Halbhydrat besteht.

6. Schallabsorbierendes poröses Paneel nach einem der vorhergehenden Ansprüche, wobei das Oberflächenbehandlungsmittel aus einer Gruppe ausgewählt ist, die aus amphoteren, anionischen und nichtionischen Anteilen besteht.

7. Schallabsorbierendes poröses Paneel nach einem der vorhergehenden Ansprüche, wobei die Fasern synthetische organische Fasern sind, die aus der Gruppe ausgewählt sind, die aus Polyester, Polyamid und Polyolefin besteht.

8. Schallabsorbierendes poröses Paneel nach einem der vorhergehenden Ansprüche, wobei die miteinander verbundenen Poren des im Wesentlichen durchgehenden offenzelligen porösen Materials der Schicht (8) eine durchschnittliche Größenverteilung von 45 µm bis 200 µm aufweisen.

9. Schallabsorbierendes poröses Paneel nach einem der vorhergehenden Ansprüche, wobei die Schicht (8) eine Dichte zwischen 160 und 640 kg/m³ (10 und 40 lbs/ft³) aufweist.

10. Schallabsorbierendes poröses Paneel nach Anspruch 9, wobei die Schicht (8) eine Dichte zwischen 240 und 560 kg/m³ (15 und 35 lbs/ft³) aufweist.

11. Schallabsorbierendes poröses Paneel nach einem der vorhergehenden Ansprüche, wobei die Vertiefungen (6) wenigstens 3,2 mm (0,125 Inch) tief sind.

12. Schallabsorbierendes poröses Paneel nach einem der vorhergehenden Ansprüche, das weiterhin ein Rückenverstärkungsmaterial (10) umfasst, das an der ersten Fläche (7) angehaftet ist.

13. Schallabsorbierendes poröses Paneel nach einem der vorhergehenden Ansprüche, das zwei Schichten (8) umfasst, die derart aneinander befestigt sind, dass Flächen mit den geometrischen Vertiefungen (6) einander zugewandt sind, um Hohlräume zu schaffen, die aus gespiegelten Vertiefungen (6) bestehen.

14. Schallabsorbierendes poröses Paneel nach einem der Ansprüche 1 bis 12, das weiterhin ein Gitterstoffmaterial (4) aufweist, das an der zweiten Fläche (5) befestigt ist.

15. Schallabsorbierendes poröses Paneel nach Anspruch 14, wobei der Gitterstoff (4) aus einem nichtgewobenen Glasfasermaterial gebildet ist, das eine Luftströmung von 2,8 bis 28,3 m³/min (100 bis 1000 ft³/min) aufweist.

16. Schallabsorbierendes poröses Paneel nach Anspruch 15, wobei das nichtgewobene Glasfasermaterial eine Dicke zwischen 0,076 und 0,76 mm (0,003 und 0,03 Inch) aufweist.

17. Verfahren zur Herstellung eines schallabsorbierenden porösen Paneels, das die Schritte umfasst:
- Kombinieren auf einer nassen Basis von 53 bis 68 Gewichtsprozent Zement, 17 bis 48 Gewichtsprozent Wasser, 0,05 bis 5 Gewichtsprozent Faser und 0,01 bis 10 Gewichtsprozent Oberflächenbehandlungsmittel zur Bildung eines unausgehärteten wasserhaltigen Schaumzementmaterials,
- Ausbilden einer Schicht (8) mit dem unausgehärteten wasserhaltigen Schaumzementmaterial,
- Ausbilden eines geometrischen Musters aus Vertiefungen (6) innerhalb einer Oberfläche (5) der Schicht (8) aus unausgehärtetem wasserhaltigen Schaumzementmaterial und
- Aushärten des wasserhaltigen Schaumzementmaterials, so dass die darin ausgebildeten Vertiefungen (6) ungefähr 50% bis ungefähr 90% der Schicht (8) umfassen.

18. Verfahren nach Anspruch 17, das weiterhin das Aufbringen eines Gitterstoffmaterials (4) auf die Oberfläche (5) mit den Vertiefungen (6) der Schicht (8) aus ausgehärtetem wasserhaltigen Schaumzementmaterial umfasst.

## Revendications

1. Panneau poreux d'absorption acoustique comprenant une couche (8)
- construite à partir d'un matériau à cellules ouvertes substantiellement continu
- ayant des pores interconnectés dans celui-ci et
- comprenant un matériau cimentaire expansé durci
- ayant une première face (7) avec un profil substantiellement plan et une deuxième face (5) et
- étant formée à partir d'une suspension épaisse expansée aqueuse aérée composée de ciment, d'eau, de fibres organiques synthétiques et d'un agent tensioactif,
**caractérisé en**
- **ce que** la suspension épaisse expansée est composée de
- 53% à 68% en poids de ciment,
- 17% à 48% en poids d'eau,
- 0,05% à 5% en poids de fibres organiques synthétiques et
- 0,01 % à 10% en poids d'un agent tensioactif et
- que la deuxième face (5) a un motif géométrique de dépressions (6) formées dans celle-ci constituant 50% à 90% du volume total de la forme solide de la couche (8) sans dépressions.

2. Panneau poreux d'absorption acoustique selon la revendication 1, dans lequel le matériau cimentaire comprend environ 53% à environ 66% en poids de ciment.

3. Panneau poreux d'absorption acoustique selon la revendication 1, dans lequel le matériau cimentaire expansé est formé à partir d'une suspension épaisse expansée aqueuse aérée composée de
- 54% à 61 % en poids de ciment,
- 32% à 44% en poids d'eau,
- 0,1 % à 3% en poids de fibres organiques synthétiques et
- 0,5% à 5% en poids d'un agent tensioactif.

4. Panneau poreux d'absorption acoustique selon l'une des revendications précédentes, dans lequel le ciment est choisi parmi le groupe consistant en le ciment de gypse, le ciment Portland, le ciment Sorel, le ciment de laitier, le ciment aux cendres volantes, le ciment alumineux et des mélanges de ceux-ci.

5. Panneau poreux d'absorption acoustique selon la revendication 4, dans lequel le ciment de gypse est choisi parmi le groupe consistant en le sulfate de calcium hémihydrate alpha et le sulfate de calcium hémihydrate bêta.

6. Panneau poreux d'absorption acoustique selon l'une des revendications précédentes, dans lequel l'agent tensioactif est choisi parmi un groupe consistant en des groupes caractéristiques amphotères, anioniques, et non ioniques.

7. Panneau poreux d'absorption acoustique selon l'une des revendications précédentes, dans lequel les fibres sont des fibres organiques synthétiques choisies parmi le groupe consistant de polyester, de polyamide, et de polyoléfine.

8. Panneau poreux d'absorption acoustique selon l'une des revendications précédentes, dans lequel les pores interconnectés du matériau poreux à cellules ouvertes substantiellement continu de la couche (8) ont une distribution de tailles moyennes de 45 µm à 200 µm.

9. Panneau poreux d'absorption acoustique selon l'une des revendications précédentes, dans lequel la couche (8) a une densité entre 160 et 640 kg/m³ (10 et 40 lbs/ft³).

10. Panneau poreux d'absorption acoustique selon la revendication 9, dans lequel la couche (8) a une densité entre 240 et 560 kg/m³ (15 et 35 lbs/ft³).

11. Panneau poreux d'absorption acoustique selon l'une des revendications précédentes, dans lequel les dépressions (6) ont une profondeur d'au moins 3,2 mm (0,125 pouce).

12. Panneau poreux d'absorption acoustique selon l'une des revendications précédentes, comprenant en outre un matériau de dos (10) collé à la première face (7).

13. Panneau poreux d'absorption acoustique selon l'une des revendications précédentes comprenant deux couches (8) qui sont fixées l'une à l'autre de telle sorte que des faces ayant les dépressions (6) géométriques se font face l'une à l'autre, de façon à créer des vides composés de dépressions (6) en miroir.

14. Panneau poreux d'absorption acoustique selon l'une des revendications 1 à 12, incluant en outre un matériau de grille (4) fixé à la deuxième face (5).

15. Panneau poreux d'absorption acoustique selon la revendication 14, dans lequel la grille (4) est formée à partir d'un matériau de fibre de verre non tissé ayant un flux d'air de 2,8 à 28,3 m³/min (100 à 1 000 ft³/min).

16. Panneau poreux d'absorption acoustique selon la revendication 15, dans lequel le matériau de fibre de verre non tissé a une épaisseur entre 0,076 et 0,76 mm (0,003 et 0,03 pouce).

17. Procédé de fabrication d'un panneau poreux d'absorption acoustique comprenant les étapes de :
- combinaison sur une base mouillée de 53% à 68% en poids de ciment, 17% à 48% en poids d'eau, 0,05% à 5% en poids de fibres, et 0,01% à 10% en poids d'un agent tensioactif pour former un matériau cimentaire expansé aqueux non durci,
- formation d'une couche (8) avec le matériau cimentaire expansé aqueux non durci,
- formation d'un motif géométrique de dépressions (6) au sein d'une surface (5) de la couche (8) de matériau cimentaire expansé aqueux non durci et
- durcissement du matériau cimentaire expansé aqueux de façon à ce que les dépressions (6) formées dans celui-ci constituent approximativement 50% à approximativement 90% de la couche (8).

18. Procédé selon la revendication 17, comprenant en outre l'application d'un matériau de grille (4) sur la surface (5) avec les dépressions (6) de la couche (8) de matériau cimentaire expansé aqueux durci.
